Europäisches Patentamt

European Patent Office

Office européen des brevets

(11) Publication number: **0 345 381**
**A2**

## EUROPEAN PATENT APPLICATION

(21) Application number: **88119288.4**

(22) Date of filing: **21.11.88**

(51) Int. Cl.⁴: **B01D 39/14**

(30) Priority: **07.06.88 US 202647**

(43) Date of publication of application:
**13.12.89 Bulletin 89/50**

(84) Designated Contracting States:
**AT CH DE ES FR GB GR IT LI NL SE**

(71) Applicant: **AMERICAN CYANAMID COMPANY**
**1937 West Main Street P.O. Box 60**
**Stamford Connecticut 06904-0060(US)**

(72) Inventor: **Woodruff, Keith F.**
**1485 Force Drive**
**Mountainside New Jersey 07092(US)**

(74) Representative: **Wächtershäuser, Günter, Dr.**
**Tal 29**
**D-8000 München 2(DE)**

(54) **Liquid filter.**

(57) Liquid, especially water filters and the use thereof are disclosed. The filters, which may be constructed in a configuration which creates a maximum surface area, per unit volume, for filtration of the liquid are self-supporting structural elements which are comprised of a porous matrix having uniformly entrapped therewithin activated carbon particles. The porous plastic matrix preferably is formed from a thermoplastic polymeric material having an average particle size substantially in excess of the average particle size of the activated carbon particles.

EP 0 345 381 A2

## LIQUID FILTER

### FIELD OF THE INVENTION

This invention relates generally to liquid filters, and is particularly concerned with the provision of a water filter in which particles having both solid and gas phase filtration activity, specifically, activated carbon, are largely, if not solely responsible for the filtering characteristics of the filter. In a preferred aspect, the invention is concerned with self-supporting water filtration structures of a specific configuration, wherein activated carbon particles are entrapped within a porous plastic matrix.

### BACKGROUND OF THE INVENTION

Liquid filters, and especially water filters, are in widespread commercial use at the present time. Such filters, at least predominantly, are comprised of filamentary and/or fibrous materials, or, alternatively, utilize granular activated carbon particles simply contained within a confined area or cartridge. The most commonly recognized commercial consumer example of the latter type of filter is the INSTAPURE® Water Filter apparatus available from Teledyne Water Pik. Applicant is aware of one such filter, however, wherein porous plastic is used to entrap therewithin relatively large activated carbon particles. This filter is available from Amway Corporation under the name Amway® Water Treatment Systems, and utilizes relatively large carbon particles. The Amway filter is designed for in-line water filtration as opposed to faucet attachment.

It has, therefore, been previously recognized that activated carbon possesses desirable properties for use in a liquid filter. It has, however, also been at least implicitly appreciated that the use of relatively fine particles of activated carbon in a liquid filter structure poses problems due to the difficulty of handling the dusting which such fine particles create. Additionally, fine carbon particles pose a compaction problem which, to Applicants' knowledge, has not, until now, been satisfactorily overcome. Forming a filter of loose granular particles activated carbon, on the other hand, has heretofore proven to be relatively inefficient, as comparison of the filter of instant invention with the INSTAPURE® Water Filter device has shown.

### SUMMARY OF THE INVENTION

Bearing in mind the foregoing difficulties, a primary object of the present invention is to provide a liquid, particularly water, filter wherein relatively small activated carbon particles are entrapped within a porous plastic matrix to form a self-supporting structural part.

More specifically, it is another object of the present invention to provide a liquid, particularly water, filter structure which consists essentially of activated carbon particles of a relatively small size which are contained within the porous plastic matrix or structure of a particular configuration, to provide a stable filter structure suitable for use to filter, e.g., water, which filter is capable of operating with increased filtration efficiency relative to currently known filtration structures, specifically in the context of the filtration of potable water.

Further, it is an object of the present invention to provide such a filter incorporating such activated carbon particles wherein the bonding agent can be one that is relatively easily commercially available and relatively inexpensive, such as polyethylene, polypropylene, or the like.

Additionally, it is an object of the invention to provide such a filter element which is so configured to present a maximum surface to the liquid to be filtered therethrough.

Still further, it is an object of the invention to provide such a filter which presents a uniform filter path over the surface of the filter.

The invention resides in the construction of a liquid, particularly water, self-supporting filter structure possessing the properties consistent herewith. The invention will be better understood in the objects set forth above, and others will become apparent after a reading of the following description.

### BRIEF DESCRIPTION OF THE DRAWINGS

In order to assist in the understanding of the structure and properties of the self-supporting filter of the instant invention, reference is made to the following drawings in the subsequent description as follows:

Figure 1 is a top plan view of a preferred configuration for the self-supporting filter structure of the present invention;

Figure 2 is a side view, in elevation, looking from the left side of Figure 1, the obverse side being identical, of the filter embodiment shown in Figure 1;

Figure 3 is a bottom view of the filter embodiment shown in Figure 1;

Figure 4 is a front view, in elevation, of the filter embodiment of Figure 1, the rear view being identical;

Figure 5 is a cross-sectional view taken along the lines 5-5 of Figure 1;

Figure 6 is a cross-sectional view taken along the lines 6-6 of Figure 3;

Figure 7 is a cross-sectional view taken along the lines 7-7 of Figure 2;

Figure 8 is a cross-sectional view taken along the lines 8-8 of Figure 2;

Figure 9 is a top plan view of a second preferred configuration of the self-supporting filter structure of the present invention;

Figure 10 is a side view, in elevation, looking from the left side of Figure 9, the obverse side being identical, of the filter embodiment shown in Figure 9;

Figure 11 is a bottom view of the filter embodiment of Figure 9;

Figure 12 is a front view, in elevation, of the filter embodiment of Figure 9, the rear view being identical;

Figure 13 is a cross-sectional view taken along the lines 13-13 of Figure 9;

Figure 14 is a cross-sectional view taken along the lines 14-14 of Figure 11;

Figure 15 is a cross-sectional view taken along the lines 15-15 Figure 10; and

Figure 16 is a cross-sectional view taken along the lines 16-16 of Figure 10.

## DETAILED DESCRIPTION OF THE INVENTION

In accordance with the present invention, activated carbon particles are integrally mixed with a bonding agent, and the bonding agent and such carbon particles are formed into a self-supporting stable filter structure. The bonding agent may comprise, for example, any thermoplastic or thermosetting polymeric material, preferably synthetic, which is capable of being shaped into a porous matrix under the conditions of processing to be utilized. Preferably, the bonding agent is such a material which is a "thermoplastic", by which is meant generally a polymeric material having thermoplastic properties and may include any synthetic or semi-synthetic condensation or polymerization product. Illustrative thermoplastic materials include polyhydrocarbons having from 2-10 carbon atoms, preferably polyolefins, e.g., polyethylene and polypropylene, which can be high density, low density, ultra-high molecular weight and the like. Other exemplary thermoplastic materials are such as vinyl acetate, other vinyl homopolymers and copolymers, polystyrenes, polycarbonates, polyurethanes, phenoxy resins, polyester resins, and combinations of any of the above, and, provided such materials can be shaped into a porous matrix and are capable of effecting bonding at temperatures in excess of that of the normal liquid, especially water, temperature which will pass through the filter structure ultimately made, they are suitable for use.

It has been the experience that satisfactory results are obtained when the bonding agent is a polyolefin, more specifically, polyethylene, polypropylene or a mixture thereof. Of course, the selection of the bonding agent will depend, at least to some extent, on the properties sought to be obtained in the final self-supporting filter structure. For example, where a somewhat more flexible filter structure is desired, a thermoplastic material which is not fully crystalline at the temperature at which the resultant filter structure will be used would be selected. Conversely, a more rigid structure would indicate the use of a more crystalline thermoplastic (or, likewise, thermosetting) material. Among the preferred bonding agents for use in the present invention are American Hoechst Corporation's HOSTALEN® GUR 212, 222, 412, 413, 415 and 422 polyethylenes.

Consistent herewith, the activated carbon particles are intimately mixed with the bonding agent particles and the particles providing the bonding agent are so selected that they have a size no less than, and preferably substantially greater than, on average, the particle size of the activated carbon particles. Generally, the activated carbon particles have a particle size distribution generally substantially within the range of from about less than 5 microns to about 150 microns, and, independently, the bonding agent has a

EP 0 345 381 A2

particle size distribution substantially within the range of from about 10 to about 500 microns. Preferably, the particle size distribution range for the activated carbon particles is substantially from about 5 microns to about 75 microns, and, independently, the particle size distribution range for the bonding agent is substantially from about 10 microns to about 450 microns. More preferably, the particle size distribution for the activated carbon particles within the above preferred range has an average of from about 10 microns to about 30 microns, and, independently, the particle size distribution for the bonding agent has an average of from about 125 to 175 microns. Among the preferred forms of activated carbon particles employed in the present invention are those available from Calgon Corporation under the tradenames WPH, BL, RB, RC, ADP and PCB-G.

The mixing is carried out in any suitable manner, but typically with the activated carbon particles present in a relative amount of between about 30% and 65%, by weight, preferably from about 30% to about 50% by weight, and most preferably, between about 35% to about 45%, by weight, and the particles of the bonding agent present in a relative amount of between about 35% and about 70%, by weight, preferably between about 50% and 70%, by weight, and, most preferably, between about 55% and about 65%, by weight. The foregoing weight percentages, based upon total weight of activated carbon particles and bonding agent in the mixture, also apply to the final self-supporting filter structure's composition.

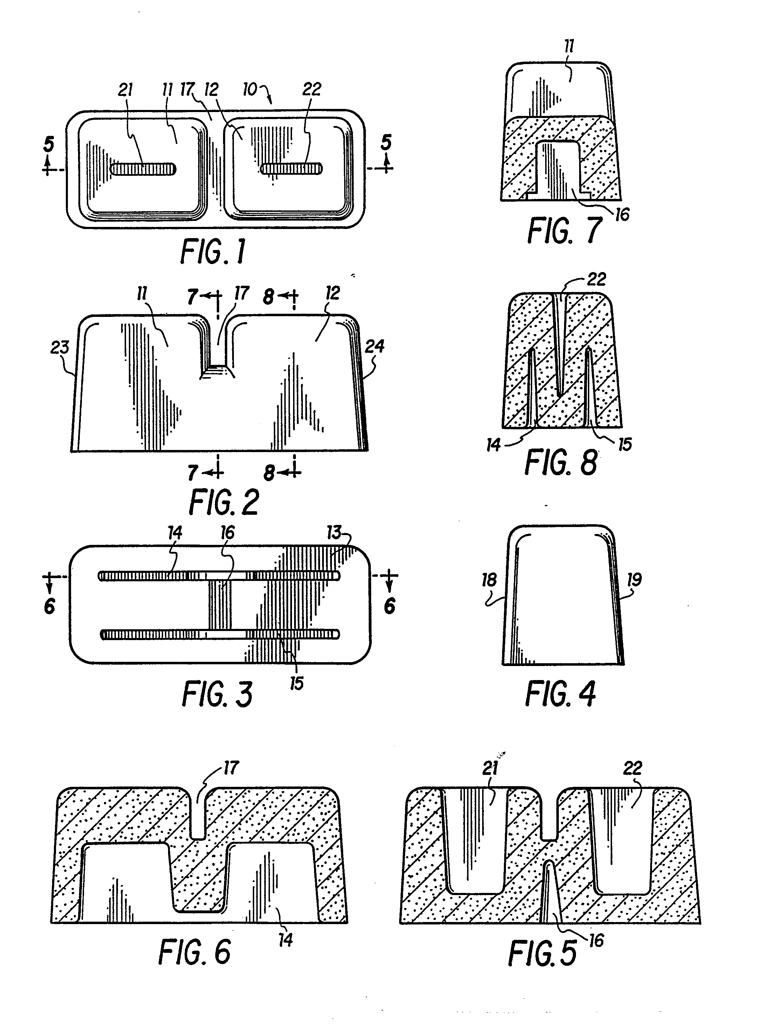

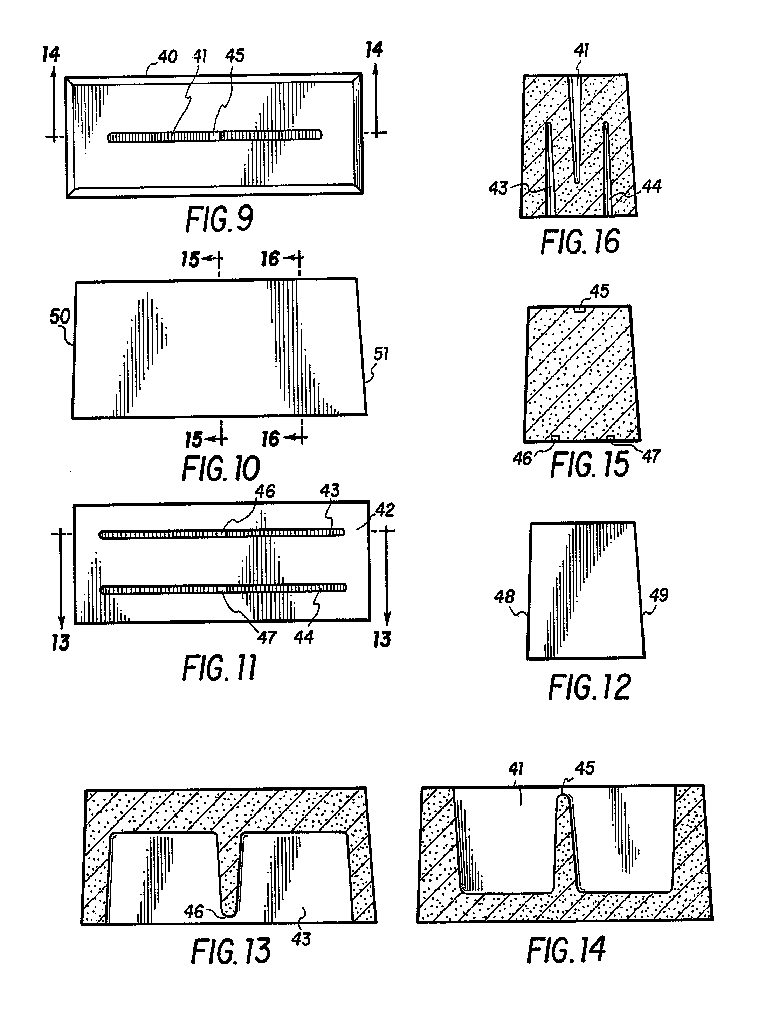

After the activated carbon particles and bonding agent particles are integrally mixed until substantial uniformity of distribution of the carbon particles throughout the mixture attained, the mixture is formed into a suitable structure, e.g., of the configuration shown in Figure 1 or 9, with heat being applied to soften the bonding agent whereby it adheres to the adjacent carbon particles and serves as a binder therebetween, thereby resulting in a porous plastic matrix structure having entrapped therewithin the activated carbon particles which will perform the function of filtration of the liquid, especially water. The activated carbon particles are preferably uniformly distributed throughout the porous plastic matrix structure. To immobilize the activated carbon particles, the particles should be effectively bonded to one another by, or secured within, the porous plastic matrix structure. Effective interparticle bonding and trapping occurs, and the resultant increase in strength of the final self-supporting filter structure with minimal reduction of filtration properties results when the activated carbon particles are uniformly distributed in the filter structure without decreasing the porosity of the activated carbon particles. This does not mean, however, that each carbon particle is completely enveloped in the bonding agent material. On the contrary, it is preferred that each carbon particle merely be held within the matrix of the bonding agent material. This may be accomplished by raising the temperature of the mixture to what has been referred to heretofore as the processing temperature to produce a suitable consistency in the bonding material. Use of the proper temperature for a particular bonding material (e.g., a polymeric bonding agent material) causes that material to be softened and form a semi-solid or semi-liquid consistency. However, the bonding material is not softened to a point that no well-defined particles exist. Rather, softening occurs only to the point that the surface of the particles becomes sufficiently tacky to cause the particles to coalesce. At this temperature or stage, the polymeric bonding agent material which existed at a lower temperature as separate particles merge to form a unitary porous matrix with an increased tackiness. This tackiness, probably resulting from increased mobility of the molecular chains of the polymer, provides improved interparticle adhesion. When at this stage, the mixture of bonding agent material and activated carbon particles may be compressed sufficiently to decrease the distance between the particles and/or increase the number of contact points therebetween and increase interparticle bonding, thereby providing increased compressive strength but with retention of adsorptive properties.

It may also be desirable to incorporate a filler and/or other appropriate material(s) into the filter in order to, e.g., assist the activated carbon in its filtration activity, or to impart a desired property to the liquid (such as taste or odor), or the like. If a filler or additional additive material(s) is utilized, then preferably the same is integrally mixed with the basic structural materials during the initial mixing operation referred to above. However, it is within the scope of the invention to treat the filter structure formed in accordance herewith with such additive(s) or the like after its formation into the self-supporting structure, as well as to add such additive(s) at any convenient point during processing. Bearing in mind the fact that filler materials and/or additional additives may be incorporated into the structure, and preferably mixed with the basic ingredients hereinabove referred to initially, consideration can be given to the mixing and forming operations that can be utilized in making a filter structure embodying the invention.

The particular method of forming a filter structure in accordance with the present invention may vary widely. Exemplary such processes are as follows:

Exemplary Process 1. - A weighed amount (for example from about 15 to 17 grams) of activated carbon particles and a weighed amount (for example, from about 24 to 28 grams of ultra-high molecular weight polyethylene) of dry bonding agent particles are fed to a conventional blending machine of a type

4

incorporating a spiral agitator and adapted to carry out a dough mixing type operation. Such well known machines can easily provide a simultaneous mixing and kneading action. Following blending of the particles, the mixture is pressed or passed through a heated tube or other confined area so that the bonding agent particles are softened and adhere to adjacent particles, bearing in mind the hereinabove discussed criteria relative to the heat and compression steps of the process, thereby substantially uniformly entrapping within the finished porous plastic matrix structure the activated carbon particles.

Exemplary Process 2. - Alternatively, the blended mixture which results from the initial operation of Exemplary Process 1 above, may be poured into a vertically disposed shaped cavity wherein the mixture is heated slightly above the solid-liquid transition stage of the bonding agent particles used. The cavity is then allowed to cool and the formed structure is dropped or punched out by inverting the cavity.

Referring now to the drawings, Figure 1 shows a preferred configuration for the self-supporting filter structure of the present invention, which is designated generally by the numeral 10. The structure is of a double-hump configuration, each hump being designated by the numerals 11 and 12, respectively, which double humps are further graphically illustrated. The transverse depression 17 between the two humps would enable, e.g., a projection from a housing element for the filter (not shown) to be located therewithin to maintain the filter at a fixed location within the housing. Each of such double humps 11 and 12 have generally centrally located longitudinally elongated slots or cavities, which are generally wedge-shaped in configuration denoted by the numbers 21 and 22, respectively, which slots or cavities are further illustrated in Figure 5. The bottom of the filter 13, as shown in Figure 3, shows two longitudinal, generally wedge-shaped slots 14 and 15, connected by a latitudinal slot 16 (also wedge-shaped) each of the two longitudinal slots 14 and 15 having a double hump configuration in phase with double humps 11 and 12. This configuration is more fully illustrated by Figure 6, wherein slot 14 is illustrated. The latitudinal slot 16 is shown more understandably in Figures 5 and 7. And, Figure 8 shows the offset nature of the longitudinal slots 14 and 15 from the slots or cavities 21 and 22 (particularly slot or cavity 22 in the Figure). Longitudinal sides 18 and 19 of the filter are tapered inwardly in an upward direction from base 13 of the filter. End sides 23 and 24 of the filter are also tapered inwardly in an upward direction from base 13. (See, e.g. Figure 2). As can best be appreciated by the view of the embodiment of the self-supporting filter structure of Figures 1-8 offered by Figure 8, such filter structure's configuration, which is generally M-shaped in cross-section, creates a large surface area for the filter within its volume, thereby maximizing the filtration efficacy thereof, providing a uniform filter path over the entire surface area of the filter, and maximizing flow through the filter while maintaining filtration efficacy.

The configuration of the filter structure depicted in Figures 9 through 16 is similar to the construction of the filter embodiment shown in Figures 1 through 8, except that the filter is generally more rectangular in shape, both from an end view and a side elevational view, and does not have the double hump.The filter, generally designated by the numeral 40 in Figure 9 has one elongated longitudinal slot generally centrally located in the upper surface thereof denoted by the number 41. The bottom surface 42 of the self-supporting filter, as is shown in Figure 11, contains two parallel longitudinal slots which are offset from longitudinal slot 41, and are denoted by the numbers 43 and 44 respectively. The configuration of slot 41 is of an inverted double hump, as is illustrated in Figure 14, each of such humps being generally wedge-shaped. Alternatively, slot 41 could be regarded as two, side-by-side identical wedge-shaped cavities connected by a passage 45. The configuration of slots 43 and 44 in the bottom 42 of the filter 40 are best understood by reference to Figure 13, wherein it is shown these slots are of an upright double hump configuration. Again, as with the configuration of slot 41, but invertedly, slots 43 and 44 could be regarded each as two, side by side wedge-shaped, longitudinally elongated cavities connected by a relatively shallow passage, designated as 46 for slot 43. The "between humps" view of the filter cross-section is illustrated in Figure 15 and the "mid-hump" view of the filter is best seen or represented by Figure 16, wherein it is also seen that the longitudinal cross-section of the filter is generally M-shaped.

Consistent with the description set forth herein, a self-supporting filter structure of the configuration set forth in Figures 1-8 hereof was made, having dimensions of approximately 3.25 inches in length, 1.31 inches in width and 1.37 inches in height and containing approximately 15 to 17 grams of activated carbon particles. Tables I and II below illustrate the comparative performance of such filter structure of the present invention versus a currently commercially available INSTAPURE® water filter, the filter of the instant invention being housed in a simple molded plastic holder for the experimental comparison. The Table I shows free chlorine removal (in percent) versus the influent chlorine level (in ppm) of water which is contacted with the filter, the INSTAPURE® filter comprising about 60 grams of activated carbon particles loosely contained within a housing therefor, and the filter of the present invention, as aforesaid, comprising only about 15 to 17 grams of activated carbon particles.

TABLE I

| COMPARATIVE PERCENT FREE CHLORINE REMOVAL (at 10 gallons passed) | | |
| --- | --- | --- |
| Influent Chlorine Level (in ppm) | Percent Free Chlorine Removal | |
| | INSTAPURE® Filter Device | Filter of Present Invention |
| 0.20 | 85% | 92% |
| 0.40 | 90 | 94 |
| 0.60 | 85 | 96 |
| 0.80 | 79 | 97 |
| 1.00 | 73 | 98 |
| 1.20 | 78 | 98 |
| 1.40 | 75 | 98 |

From Table I, it can be seen that, after ten (10) gallons of water containing free chlorine have contacted the filter, at levels of chlorine ranging from 0.20 to 1.40 ppm, the filter structure of the present invention consistently outperforms the INSTAPURE® device's filter, and is removing more free chlorine from the water.

TABLE II

| COMPARATIVE PERCENT FREE CHLORINE REMOVAL (at 75 gallons passed) | | |
| --- | --- | --- |
| Influent Chlorine Level (in ppm) | Percent Free Chlorine Removal | |
| | INSTAPURE® Filter Device | Filter of Present Invention |
| 0.20 | 72% | 85% |
| 0.40 | 66 | 94 |
| 0.60 | 71 | 96 |
| 0.80 | 70 | 96 |
| 1.00 | 66 | 96 |
| 1.20 | 64 | 95 |
| 1.40 | 66 | 95 |

From Table II, it is seen that, after seventy-five (75) gallons of water have contacted the filters, the filter of the present invention is still outperforming the INSTAPURE® filter at all levels of free chlorine content tested.

TABLE III

| COMPARATIVE CHLOROFORM REMOVAL (at 10 gallons passed) | | |
|---|---|---|
| Flow Rate of Water (in gallons per minute) containing 30 to 60 parts per billion chloroform | Percent Chloroform Removal | |
| | INSTAPURE® Filter Device | Filter of Present Invention |
| 0.40 | 65 | 99 |
| 0.60 | 48 | 98 |
| 0.80 | 36 | 98 |
| 1.00 | -* | 97 |
| 1.20 | -* | 94 |
| 1.40 | -* | 91 |

* - not tested

TABLE IV

| COMPARATIVE CHLOROFORM REMOVAL (at 75 gallons passed) | | |
|---|---|---|
| Flow Rate of Water (in gallons per minute) containing 30 to 60 parts per billion chloroform | Percent Chloroform Removal | |
| | INSTAPURE® Filter Device | Filter of Present Invention |
| 0.40 | 61% | 55% |
| 0.60 | 37 | 49 |
| 0.80 | 55 | 33 |
| 1.00 | -* | 25 |
| 1.20 | -* | 25 |
| 1.40 | -* | 24 |

* - not tested

Tables III and IV, above, show the performance of the same self-supporting filter structure of the present invention which is the embodiment of Figures 1-8, above, versus the same INSTAPURE® water filter device as is discussed above.

Table III shows that, after ten (10) gallons of water have contacted the filters, at flow rates ranging from 0.40 to 0.80 gallons per minute (gpm), the filter of the present invention removes substantially more chloroform from the water than does the INSTAPURE® filter device, although Table IV indicates that, after seventy-five (75) gallons of chloroform-contaminated water have contacted each of the filters, the filters function similarly.

Table V graphically illustrates the results of a taste preference test conducted utilizing 43 consumers. The overall rating given the water filtered through the filter represented by Figures 1-8 hereinabove shows a distinct preference therefor by the consumers as compared not only to regular tap water from Clifton, New Jersey (denoted by the letter A in the Table) which also served as the water which was filtered by both the filter of the instant invention and the INSTAPURE® filtration device water filtered by the INSTAPURE® device (denoted by the letter E in the Table), but also DEER PARK® bottled water and POLAND SPRING® bottled water (denoted by the letter B). In the cases of the overall rating and clean/fresh taste rating, higher ratings indicate preference, and for the chemical taste and chlorine taste ratings, lower ratings indicate a preference.

TABLE V

| COMPARATIVE RATING OF FILTRATION PERFORMANCE | | | | | |
|---|---|---|---|---|---|
| (Scale 0 - 8) | | | | | |
| Test | A | B | C | D | E |
| Overall Rating | 4.9 | 4.0 | 4.8 | 7.2 | 5.4 |
| Clean/Fresh Taste | 4.4 | 3.6 | 4.7 | 7.1 | 5.1 |
| Chemical Taste | 3.2 | 3.4 | 2.4 | 1.3 | 2.6 |
| Chlorine Taste | 2.9 | 1.3 | 1.3 | 0.4 | 2.1 |

The results of the configuration discussed above, which come about when the filter is comprised of activated carbon particles entrapped within a porous plastic structure yield a liquid, especially water, filter which, when used, e.g., in a suitably constructed filter housing mounted to a kitchen or similar faucet, produces a superior liquid, particularly water, filtration, which is particularly effective in sediment removal, free chlorine removal, trihalomethanes removal, and other industrial solvent removal and creates a resultant water taste which is superior to currently available faucet-attached water filtration devices.

It is seen that the present invention produces articles of manufacture with beneficial properties, making them useful in a variety of applications. Many variations will suggest themselves to those skilled in this art in light of the foregoing detailed description. All such obvious variations are within the full intended scope of the appended claims.

## Claims

1. A filter structure suitable for use in the purification of a liquid comprising activated carbon particles entrapped within a porous plastic matrix wherein the size of the activated carbon particles is substantially within the range of from less than about 5 microns to about 150 microns.

2. The filter of Claim 1 which is self-supporting and wherein the average particle size of the polymer utilized to form the porous plastic matrix in which the activated carbon particles are entrapped is substantially larger than the average particle size of the activated carbon particles.

3. The filter of Claim 1 wherein the activated carbon particles are uniformly distributed throughout the porous plastic matrix.

4. The filter of Claim 1 wherein the average activated carbon particle size is within the range of from about 10 microns to about 30 microns.

5. The filter of Claim 2 wherein the porous plastic matrix is formed from a thermoplastic polymer having a particle size distribution substantially within the range of from about 10 to about 500 microns.

6. The filter of Claim 1 wherein the configuration thereof is substantially as shown in Figures 1 through 8.

7. The filter of Claim 1 wherein the configuration thereof is substantially as shown in Figures 9 through 16.

8. A filter element for liquids, said filter element comprising a porous filter material in the form of a body so configured to present a maximum of surface area to the liquid to be filtered.

9. The filter element of Claim 8, wherein said porous filter material is self-supporting and comprises activated carbon particles.

10. The filter element of Claim 8, wherein said porous filter material comprises a porous plastic matrix structure impregnated with said activated carbon particles.

11. The filter element of Claim 8 in the shape of a block, and having at least one slot in the top and one in the base, each of said slots being of such configuration and so oriented as to provide a uniform flow path over the entire filter element.

12. The filter of Claim 11 wherein said block is elongated, and the sides thereof taper inwardly in an upward direction.

13. The filter of Claim 12 wherein said slots are longitudinally oriented and generally wedge shaped.

14. The filter of Claim 13, wherein said filter has one central slot opening from the top, and two base slots each spaced outwardly from said upper slot and inwardly from the outer surface of the sides, of the block, thereby creating a generally M-shaped longitudinal cross-section in the block.

15. The filter element of Claim 14 having a generally centrally located transverse depression in the top surface.

16. The filter element of Claim 8 wherein the configuration thereof further provides a uniform filter path, over the entire said surface area, for the liquid to be filtered.

17. A method of purifying a liquid which comprises contacting such liquid with the filter of Claim 1.

18. The method of Claim 17 wherein the liquid is water.

19. A method of removing contaminants from a liquid which comprises contacting such liquid with the filter element of Claim 8.

20. The method of Claim 19 wherein the liquid is water.

FIG. 1

FIG. 2

FIG. 3

FIG. 4

FIG. 5

FIG. 6

FIG. 7

FIG. 8

FIG.9

FIG. 10

FIG. 11

FIG. 16

FIG. 15

FIG.12

FIG. 13

FIG.14